# EUROPEAN PATENT SPECIFICATION

(11) **EP 0 984 474 B1**
(45) Date of publication and mention of the grant of the patent: **22.03.2006**
(21) Application number: 99114732.3
(22) Date of filing: 28.07.1999
(51) Int. Cl.: H01H 36/00, H01H 11/00, F16H 59/10

(54) **Structure of inhibitor switch**
Struktur einer Schalteranordnung
Structure d'un dispositif de commutation

(30) Priority: 31.08.1998 JP 26091198
(43) Date of publication of application: 08.03.2000
(73) Proprietor: Niles Parts Co., Ltd., Tokyo 143-0015 (JP)
(72) Inventor: Satoh, Shunichi, c/o Niles Parts Co., Ltd., Tokyo 143-0015 (JP); Namamura, Shinya, c/o Niles Parts Co., Ltd., Tokyo 143-0015 (JP); Tomotoshi, Tetsuya, c/o Niles Parts Co., Ltd., Tokyo 143-0015 (JP)
(74) Representative: Luderschmidt, Schüler & Partner GbR

(56) References cited:
- DE-A- 19 621 404
- US-A- 5 023 414
- US-A- 5 196 794

## Description

The present invention relates to a structure of an inhibitor switch for switching contacts in accordance with the positions of a transmission operation of an automatic transmission device used for automobiles, especially to an improvement of pole base of the inhibitor switch in which the contact sections are constructed with magnetic sensors and permanent magnets.

Hitherto, there has been known the technique as disclosed in, for example, Japanese Utility Model Publication Laid-Open 59-146222 as a prior art of this type. The prior art has such construction that a permanent magnet is fitted in a lever by using adhesive, and a printed substrate provided with a magnetic flux detecting element is molded in a main body through an insert molding method. It has been required for an inhibitor switch to provide a sufficient precision for the contact sections thereof.

However, in the conventional inhibitor switch as mentioned above, a printed substrate with insufficient precision of dimension is fixed on a pole base, and therefore there are such problem that the positon of an magnetic flux detecting element is deviated thereby resulting an insufficient precision.

The object of the present invention is to present an inhibitor switch with high precision.

Document DE 196 21 404 discloses a device according to the preamble of claim 1.

The present invention thus constructed has the following effects. The invention is claimed in Claim 1

The pole base has an offset surface which is slightly downed from the bottom surface, and the conductive body is inserted into the offset surface by using an insert molding method, it is possible to dispose the magnetic sensors on the position lower than the bottom surface of the pole base over which the movable base moves slidably, thereby preventing the magnetic sensors from any crash of movable base or the like.

According to a further preferred embodiment of the invention, wherein the pole base is provided with notches of the pole base for disposing the magnetic sensors or a substrate at the periphery of the offset surface, it is possible to hold the magnetic sensors within the notches made of resin which is non-magnetic material respectively, and prevent the inhibitor switch from any influence due to magnetic flux from the magnetic body except the permanent magnet of the movable base, thereby maintaining the property of the inhibitor switch.

According to a further preferred embodiment of the invention, wherein the pole body is provided with a guide (3j) for disposing the magnetic sensor within the offset surface, it is possible to dispose the magnetic sensors at any desired position within the pole base.

According to a further preferred embodiment of the invention, wherein the lead terminal of the magnetic sensor is folded and then the magnetic sensors are disposed in the laterally opposite direction, and further the upper surface of the magnetic sensors is approximately aligned with the bottom surface of the pole base, it is possible to maintain the distance between the magnetic sensor and the permanent magnet at a constant value, and further prevent the magnetic sensor from any crash of the movable base moving over the bottom surface of the pole base.

The embodiment of the present invention will be described with reference to the attached drawings 1 to 7 hereinafter.
Fig. 1 shows an exploded sectional view showing the embodiment of the present invention;
Fig. 2 shows an enlarged sectional view of the center portion showing the embodiment of the present invention;
Fig. 3 shows an enlarged view showing the bottom of the movable base according to the embodiment of the present invention;
Fig. 4 shows an enlarged perspective view showing the yoke of the embodiment of the present invention;
Fig. 5 shows an enlarged sectional view taking along the line X-X in Fig. 3;
Fig 6. shows an enlarged perspective view showing the pole base of the embodiment of the present invention; and

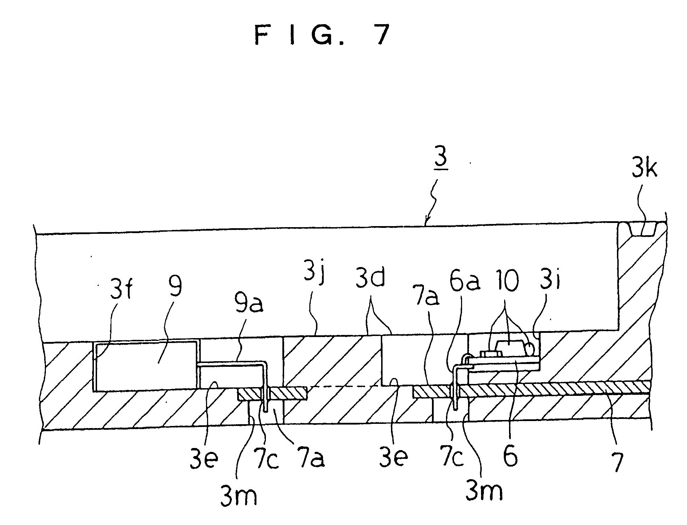

Fig. 7 shows an enlarged sectional view showing the main portion of the magnetic sensor in its mounted state according to the embodiment of the present invention.

Numeral 1 denotes a movable base in which a cylindrical section 1a to be fitted on a transmission lever shaft (not shown) of an automatic transmission device is integrally formed with a movable arm 1b having permanent magnets 4 and yokes 5. The movable base 1 is rotatably held within the space formed by a cover 2 and a pole base 3 in such manner that an upper shaft section 1c of the cylindrical section 1a is pivoted on the shaft hole 2a of the cover 2, and a lower shaft section 1d of the cylindrical section 1a is pivoted on a shaft hole 3a of the pole base 3. Moreover, the cylindrical section 1a may be replaced by the transmission lever shaft directly or a shaft (not shown) indirectly coupled to the transmission lever shaft mentioned above.

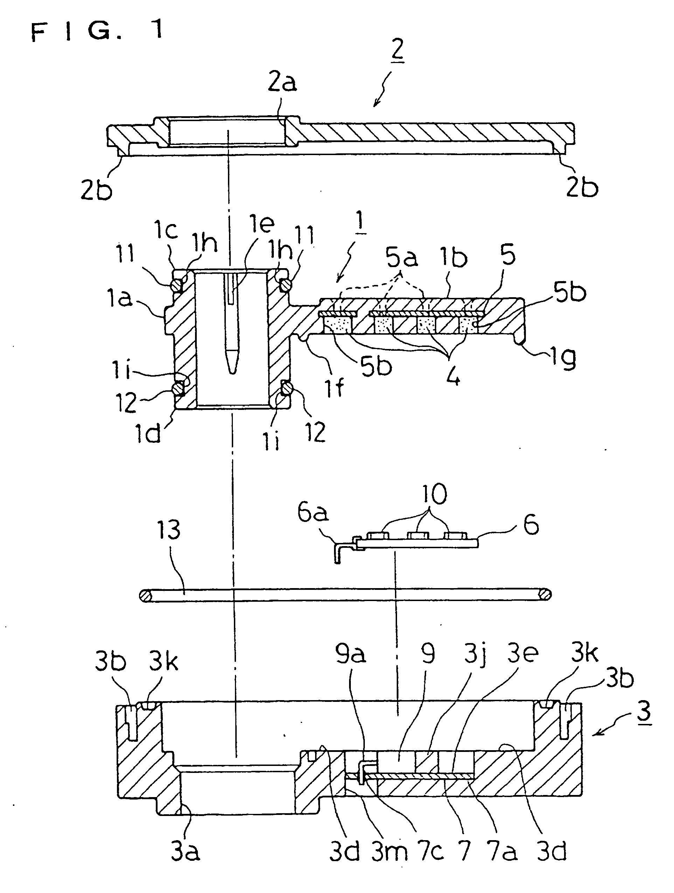

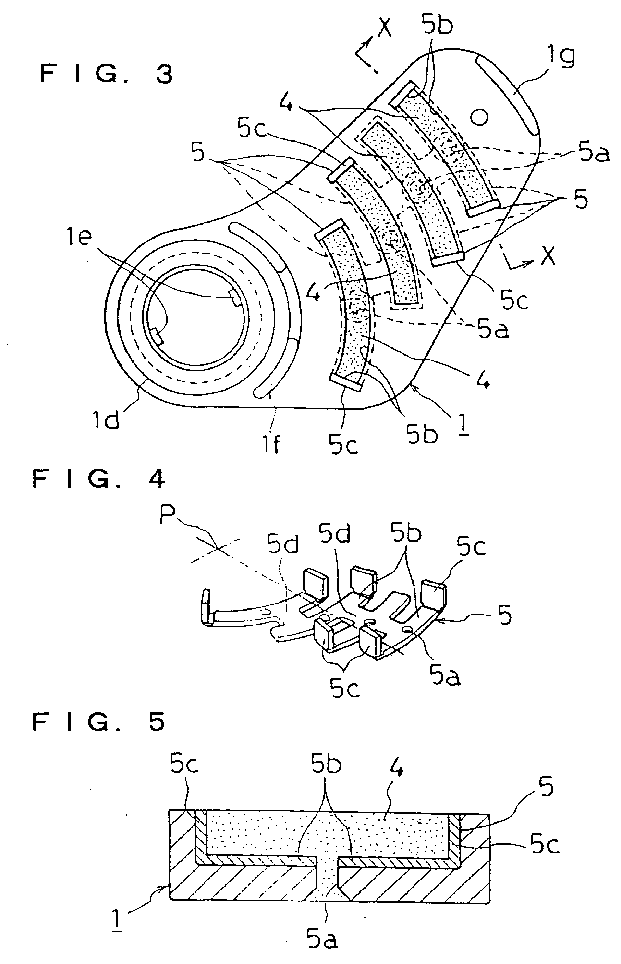

The yoke 5 is formed as shown in Figs. 1 and 3 in which four are shaped and L-letter shaped iron plates are connected with each other integrally, and there are formed gate holes 5a at the approximately center portion of four bottom surfaces respectively. The yoke 5 integrally formed on the movable base 1 may be omitted. The method for mounting the permanent magnets 4 on the movable base 1, and further the material and kind of the permanent magnets 4 are not limited.

In manufacturing of the movable base 1, pins (not shown) are at first inserted into the gate holes 5a respectively, and then the yokes 5 are molded with resin by using an insert molding method. In the yoke 5 of the movable base 1 as a primary molded product made by using the insert molding method, the portion at which the bottom pieces 5b are exposed is made as a hollowed portion. Then, the primary molded product is set on a metal mold used for forming the permanent magnet. Then, the mixture of neodymium powder (magnetic material) and PPS pellets which is called as bonded magnetic or a plastic magnet is injected into the hollowed portion of the yoke 5 thereby forming the permanent magnet 4 as a secondary molding product. Thus, the manufacture of the movable base 1 is finished.

Moreover, since the gate hole 5a is provided at the approximately center portion of each permanent magnet 4, each permanent magnet 4 is effectively avoided to be dropped out. Furthermore, the movable base 1, the yoke 5, and the permanent magnet 4 are aligned with the surface upon which the permanent magnet 4 of the movable base 1 is exposed.

The cylindrical section 1a is formed with a key 1e to be fitted to the key slit of the transmission lever shaft at the inner wall of the cylindrical portion 1a, and formed with grooves 1h and 1i for receiving o-rings 11 and 12 at the periphery of the cylindrical section 1a. The hermetic property between the cover 2 and the cylindrical section 1a is increased by the O-ring 11 fitted into the groove 1h, and the hermetic property between the pole base 3 and the cylindrical section 1a is increased by the O-ring 12 fitted into the groove 1i.

At the lower side surface of the movable arm 1b, four arc-shaped permanent magnets 4 and the folded section 5c of the yoke 5 disposed at the both ends of the permanent magnet 4 are exposed as shown in Fig. 3. Moreover, at the lower side surface of the movable arm 1b, projected sections 1f and 1g formed integrally with the movable arm 1b are projected at the periphery of the lower side shaft section 1d and the outer periphery of the movable arm 1b respectively as shown in Fig. 1. Each end of the projected sections 1f and 1g is formed with a semi-circle shaped section, thereby enabling an easily slidable operation on the bottom surface 3d of the pole base 3 upon the rotation of the movable base 1.

The cover 2 has a shaft hole 2a to be fitted to the upper side shaft section 1c and a ring-shaped projection 2b to be fitted to a coupling groove 3b formed on the peripheral lower surface of the pole base 3. The cover 2 and the pole base 3 are made of the resin material having oilproof property and heat resistance property and to which an ultrasonic welding can be easily applied. Such resin material may be nylon resins, poly propylene or the like. The cover 2 may be fitted to the pole base 3 through the movable base 1 and the substrate 6 and then the coupled portion between the couple groove 3b and the ring-shaped projection 2b is welded to archieve a hermetic seal by using the ultrasonic welding or a vibration welding.

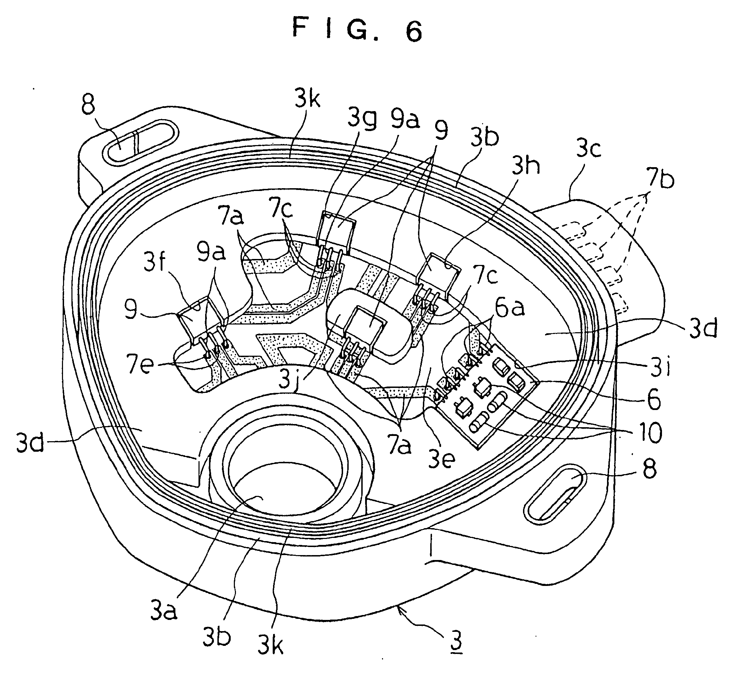

The pole base 3 is formed so that a conductive body 7 and metallic rings 8 are inserted therein, and may be fixed by using screws passing through the metallic rings 8 respectively to the outer side of the automatic transmission body. As shown in Fig. 6, the conductive body 7 has a body section 7a provided with through holes 7c and being exposed on a offset surface 3e which is downed by one step from the bottom surface 3d, and terminals 7b adapted to be projected into a connector section 3c.

On the offset surface 3e, there are provided notch slits 3f, 3g, and 3h for supporting magnetic sensors 9 respectively at the periphery portion thereof, and notch slit 3i for supporting the substrate 6 loading an electronic element 10. A guide 3j for supporting the magnetic sensor 9 is also formed within the offset surface 3e. The upper surface of the magnetic sensor 9 and the electronic elements 10 are aligned in the same level as that of the bottom surface 3d of the pole base 3 or aligned in the lower level than that of the bottom surface 3d by folding the lead terminals 6a and 9a. In the pole base 3, there are provided a cavity 3m for disposing the lead terminals 6a and 9a at the lower side of the through holes 7c of the conductive body 7, and a groove 3k for receiving a packing 13 on the contact surface between the periphery of the bottom surface 3d receiving the movable base 1 and the cover 2.

As shown in Fig. 5, the yoke 5 is a molded frame for receiving the voluntary shaped permanent magnets 4 which are formed with magnetic material by using the injection-molding method. The yoke 5 has the bottom pieces 5b as being the bottom of the hollowed portion when the permanent magnet 4 is inserted into the movable base 1 as being the primary molded product during the injection-molding operation. As shown in Fig. 4, the yoke 5 has the folded section 5c exposed to the surface of the movable base 1, the bottom pieces 5b forming the hollowed portion for receiving the permanent magnets 4 respectively, and the gate holes 5a. The yoke 5 forms plural bottom pieces 5b integrally connected with each other, and the folded section 5c for forming the hollowed portion at the end portion of each of the bottom pieces 5b. Each of the bottom pieces 5b is made as an arc shaped piece having the center point P of the cylindrical section 1a.

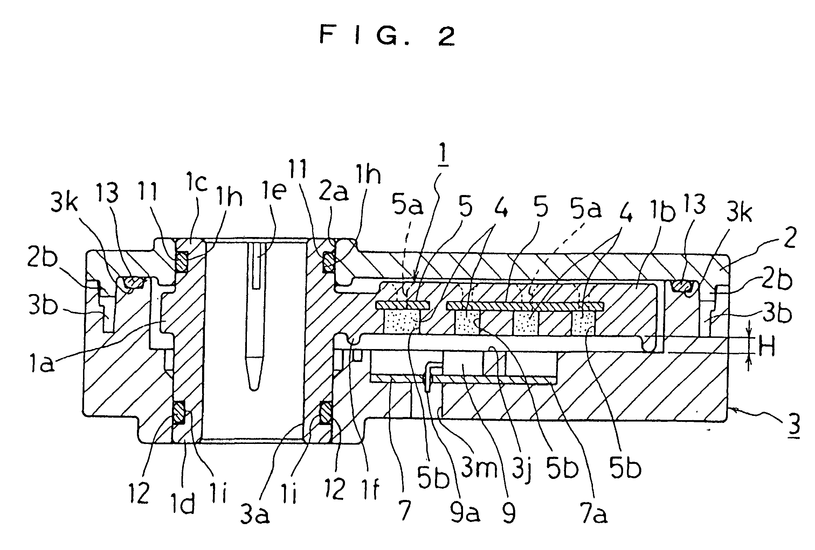

In the case where the substrate 6 and the magnetic sensor 9 are mounted on the pole base 3, the lead terminals 6a and 9a are first fixed by using solder by fitting the one end of conductive body 7 with the through holes 7b in a vertical state. Then, the lead terminals 6a ans 9a of the substrate 6 and the magnetic sensor 9 are folded at right angle and then inserted into the notches 3f and 3h respectively in a lateral orientation state. The magnetic sensor 9 may be a Hall-effect device, a Hall IC, MR element or the like for detecting magnetic flux. The magnetic sensor 9 and the notches 3f, 3g, and 3h for receiving the magnetic sensors 9 respectively are mounted suitably in accordance with the permanent magnets 4 rotated in accordance with the transmission position of the automatic transmission device. The magnetic sensor 9 is disposed so that the magnetic sensor does not contact with the movable base 1 as shown in Fig. 2.

The gap H between the magnetic sensor 9 and the permanent magnet 4 may be about 0.1 mm to 0.6 mm.

The operation of the embodiment of the present invention constructed as mentioned above will bei described in detail.
When a driver operates the shift lever, the transmission operating position of the automatic transmission device for automobiles is changed. At the time, the movable base 1 received within the inhibitor switch is rotated around the cylindrical section 1a in accordance with the movement of the shift lever, and the permanent magnet 4 is also moved in accordance with it. The magnetic sensor 9 of the substrate 6 mounted at the position adjacent to the movable base 1 detects the transmission operating position in response to the change of the magnetic flux due to the movement of the permanent magnets 4.

1 movable base, 2 cover, 3 pole base, 3c connector section, 3d bottom surface, 3e offset surface, 3f, 3g, 3h, 3i notch slit, 3j guide, 4 permanent magnet, 6 substrate. 6a, 9a lead terminal, 7 conductive body, 7a body section, 7b terminal, 9 magnetic sensor.

## Claims

1. Inhibitor switch comprising a movable base (1) provided with permanent magnets (4) and adapted to be rotated in accordance with the transmission operating position of an automatic transmission device, magnetic sensors (9) for detecting the magnetic flux from said permanent magnets (4), a pole base (3) rotatably supporting said movable base (1), and a cover (2) for rotatably supporting said movable base (1), a conductive body (7) composed of terminals (7b) projected into a connector section (3c) and a body section (7a) connected to said magnetic sensors (9) mounted within said pole base (3), is mounted on the bottom surface (3d) of said pole base (3), **characterized by** said conductive body (7) being inserted into said pole base (3) by using an insert molding method and said pole base (3) having an offset surface (3e) which is slightly recessed from said bottom surface (3d), and said conductive body (7) being inserted into said offset surface (3d) by using an insert molding method and being exposed on the offset suface (3e).

2. An inhibitor switch according to Claim 1, wherein said pole base (3) is provided with notches (3f, 3g, 3h, and 3i) for disposing said magnetic sensors (9) or a substrate (6) at the periphery of said offset surface (3e).

3. An inhibitor switch according to Claim 1 or 2, wherein said pole base (3) is provided with a guide (3j) for disposing said magnetic sensor (9) within said offset surface (3c).

4. An inhibitor switch according to Claim 1, 2, or 3, wherein a lead terminal (9a) of said magnetic sensor (9) is folded and then said magnetic sensors (9) are disposed in the laterally opposite direction, and further the upper surface of said magnetic sensors (9) is approximately aligned with said bottom surface (3d) of the pole base (3).

## Patentansprüche

1. Sperrschalter mit einer bewegbaren Basis (1), die mit Permanentmagneten (4) ausgestattet und angepasst ist, in Übereinstimmung mit der Getriebebetriebsposition einer Automatikgetriebevorrichtung gedreht zu werden, Magnetsensoren (9) zum Erfassen des Magnetflusses von den Permanentmagneten (4), einer Polbasis (3), die drehbar die bewegbare Basis (1) trägt, und einer Abdeckung (2) zum drehbaren Tragen der bewegbaren Basis (1), wobei ein leitender Körper (7), der aus Anschlüssen (7b), die in einen Verbinderabschnitt (3c) hineinragen, und einem Körperabschnitt (7a), der mit den in der Polbasis (3) angebrachten Magnetsensoren (9) verbunden ist, zusammengesetzt ist, auf der unteren Oberfläche (3d) der Polbasis (3) angebracht ist, **dadurch gekennzeichnet, dass** der leitende Körper (7) in die Polbasis (3) mittels eines Umspritzverfahrens eingefügt wird, und die Polbasis (3) eine geringfügig von der unteren Oberfläche (3d) ausgenommene Versatzoberfläche (3e) aufweist, und der leitende Körper (7) in die Versatzoberfläche (3e) mittels eines Umspritzverfahrens eingefügt und auf der Versatzoberfläche (3e) freigelegt ist.

2. Sperrschalter gemäß Anspruch 1, bei dem die Polbasis (3) mit Kerben (3f, 3g, 3h und 3i) zum Anordnen der Magnetsensoren (9) oder einem Substrat (6) an dem Umfang der Versatzoberfläche (3e) ausgestattet ist.

3. Sperrschalter gemäß Anspruch 1 oder 2, bei dem die Polbasis (3) mit einer Führung (3j) zum Anordnen des Magnetsensors (9) in der Versatzoberfläche (3c) ausgestattet ist.

4. Sperrschalter gemäß Anspruch 1, 2 oder 3, bei dem ein Leiteranschluss (9a) des Magnetsensors (9) gefaltet wird und dann die Magnetsensoren (9) in der seitlich gegenüberliegenden Richtung angeordnet werden, und ferner die obere Oberfläche der Magnetsensoren (9) näherungsweise mit der unteren Oberfläche (3d) der Polbasis (3) ausgerichtet ist.

## Revendications

1. Dispositif de commutation comprenant une base mobile (1) munie d'aimants permanents (4) et pouvant être mis en rotation en fonction des positions opérantes de transmission d'un dispositif de transmission automatique, de capteurs magnétiques (9) pour détecter le flux magnétique provenant desdits aimants permanents (4), une base polaire (3) supportant de façon rotative ladite base mobile (1), et un couvercle (2) pour supporter de façon rotative ladite base mobile (1), un corps conducteur (7) composé de bornes (7b) faisant saillie dans une section de connecteurs (3c) et une section de corps (7a) connectée auxdits capteurs magnétiques (9) montés à l'intérieur de ladite base polaire (3), est monté sur la surface de fond (3d) de ladite base polaire (3),
**caractérisé en ce que** ledit corps conducteur (7) est inséré dans ladite base polaire (3) en utilisant un procédé de moulage par insert et ladite base polaire (3) présente une surface décalée (3e) qui est légèrement évidée de ladite surface de fond (3d), et ledit corps conducteur (7) est inséré dans ladite surface décalée (3e) en utilisant un procédé de moulage par insert et se trouve à nu sur la surface décalée (3e).

2. Dispositif de commutation selon la revendication 1, dans lequel ladite base polaire (3) est munie d'encoches (3f, 3g, 3h, et 3i) pour la mise en place desdits capteurs magnétiques (9) ou d'un substrat (6) sur la périphérie de ladite surface décalée (3e).

3. Dispositif de commutation selon la revendication 1 ou 2, dans lequel ladite base polaire (3) est munie d'un guidage (3j) pour la mise en place dudit capteur magnétique (9) à l'intérieur de ladite surface décalée (3e).

4. Dispositif de commutation selon la revendication 1, 2 ou 3, dans lequel une borne de connexion (9a) dudit capteur magnétique (9) est repliée et ensuite lesdits capteurs magnétiques (9) sont disposés dans la direction latéralement opposée, et de plus la surface supérieure desdits capteurs magnétiques (9) est alignée de façon approximative sur ladite surface de fond (3d) de ladite base polaire (3).
